# EUROPEAN PATENT APPLICATION

(11) **EP 1 748 634 A2**
(43) Date of publication of application: **31.01.2007**
(21) Application number: 06117873.7
(22) Date of filing: 26.07.2006
(51) Int. Cl.: H04M 3/42, H04M 7/00

(54) **Method and apparatus for protecting calling party identification**

(30) Priority: 29.07.2005 US 192482
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Asquith, Julian Peter

(57) **Abstract**

A method and apparatus for enabling a packet network provider to allow a subscriber, e.g., a calling party, to send a key associated their private number to a terminating subscriber, e.g., a called party, is disclosed. The key enables the network to retain the private number information in a call log that the terminating user can unlock and have the network return the call to the originator on their behalf without divulging the original calling party's information. Although the terminating subscriber is presented with a key enabling them to have the network place a call to the private user, the calling party number is never revealed to the terminating subscriber. In one embodiment, the key is in the form of a pseudo phone number generated by the network which can be used to map into the original calling party's phone number within the network.

## Description

The present invention relates generally to communication networks and, more particularly, to a method and apparatus for returning phone calls while protecting calling party identification in communications networks, e.g. packet networks such as Voice over Internet Protocol (VoIP) networks.

### BACKGROUND OF THE INVENTION

Originators of calls sometimes have private numbers that they do not want to reveal even to parties that they desire to speak with. This desire for privacy can make it difficult for a called party to return a call when they are unavailable to answer an originating call from a person who has an undisclosed number. However, if there is a method to provide a way for the called party to return the call without knowing the calling party's information, the privacy of the calling party can be preserved.

Therefore, a need exists for a method and apparatus for allowing a called party to return a phone call to a calling party while protecting the calling party's identification in a packet network, e.g., a VolP network.

### SUMMARY OF THE INVENTION

In one embodiment, the present invention enables a packet network provider, e.g., a VolP network provider, to allow a subscriber to send a key associated their private number to a terminating subscriber. The key enables the network to retain the private number information in a call log that the terminating user can unlock and have the network return the call to the originator on their behalf without divulging the original calling party's information. Although the terminating subscriber is presented with a key enabling them to have the network place a call to the private user, the calling party number is never revealed to the terminating subscriber. In one embodiment, the key is in the form of a pseudo phone number generated by the network which can be used to map into the original calling party's phone number within the network.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of sending a call return key by a calling party whose calling identification is protected related to the present invention;

FIG. 3 illustrates an example of returning phone calls while protecting calling party identification related to the present invention;

FIG. 4 illustrates a flowchart of a method for sending a call return key by a calling party whose calling identification is protected of the present invention;

FIG. 5 illustrates a flowchart of a method for returning phone calls while protecting calling party identification of the present invention; and

FIG. 6 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

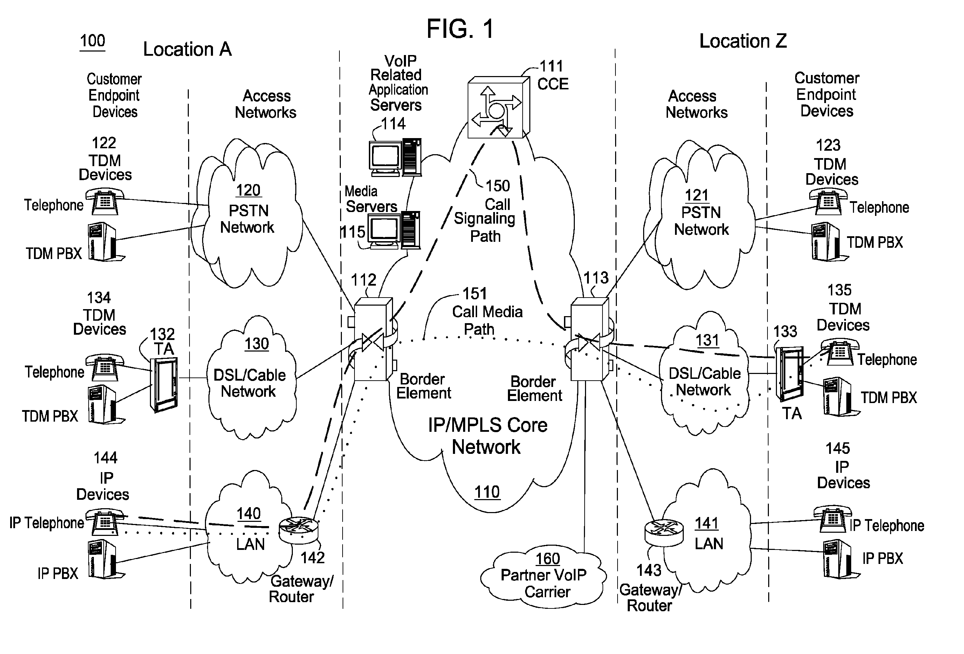

To better understand the present invention, FIG. 1 illustrates an example network, e.g., a packet-switched network such as a VolP network related to the present invention. The VolP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. An IP network is broadly defined as a network that uses Internet Protocol to exchange data packets.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VolP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VolP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, and VoIP related servers 114. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Originators of calls sometimes have private numbers that they do not want to reveal even to parties that they desire to speak with. This desire for privacy can make it difficult for a called party to return a call when they are unavailable to answer an originating call from a person who has an undisclosed number. However, if there is a method to provide a way for the called party to return the call without knowing the calling party's information, the privacy of the calling party can be preserved.

To address this need, the present invention enables a packet network provider, e.g., a VolP network provider, to allow a subscriber to send a key associated their private number to a terminating subscriber. The key enables the network to retain the private number information in a call log that the terminating user can unlock and have the network return the call to the originator on their behalf without divulging the original calling party's information. Although the terminating subscriber is presented with a key enabling them to have the network place a call to the private user, the calling party number is never revealed to the terminating subscriber. In one embodiment, the key is in the form of a pseudo phone number generated by the network which can be used to map into the original calling party's phone number within the network.

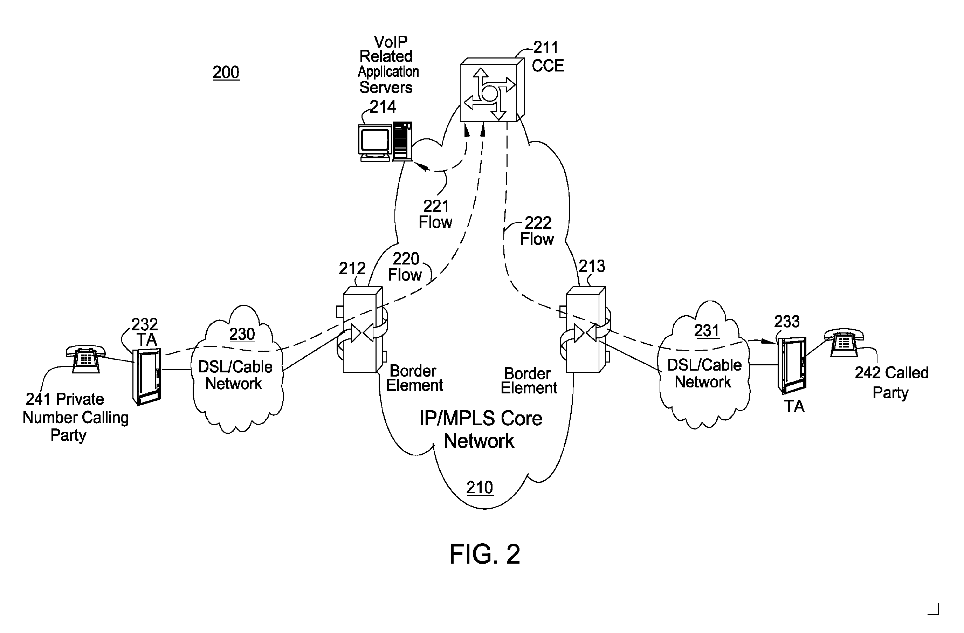

FIG. 2 illustrates an example 200 of sending a call return key by a calling party whose calling identification is protected related to the present invention. In FIG. 2, calling party 241 has subscribed to the returning phone calls while protecting calling party identification service feature. The service feature can be subscribed on a subscription basis or on a pay per use basis. The service feature can be activated by entering a predefined Dual Tone Multiple Frequency (DTMF) signal set by the network provider before a call is made by calling party 241. Private number calling party 241 enters the predefined DTMF signal to activate the returning phone calls while protecting calling party identification service feature and then makes a phone call to called party 242 via TA 232, access network 230, BE 212 and CCE 211 using flow 220. Upon receiving the call setup signaling message, CCE 211 communicates with AS 214 using flow 221 and finds out that calling party 241 has subscribed and activated the returning phone calls while protecting calling party identification service feature. AS 214 saves the information pertaining to calling party 241, such as calling name and phone number information, and then generates a pseudo phone number key associated with calling party 241. AS 214 sends the key to CCE 211 using flow 221 and CCE 211 sends the pseudo phone number key as the calling party identification information in the call setup signaling message to called party 242 via BE 213, access network 231 and TA 233 using flow 222. The calling party identification, such as pseudo key phone number, is shown on the caller identification (ID) display of called party 242. Even if called party 242 cannot answer the call, called party 242 can use the pseudo key phone number to call calling party 241 back without knowing the identity of calling party 241.

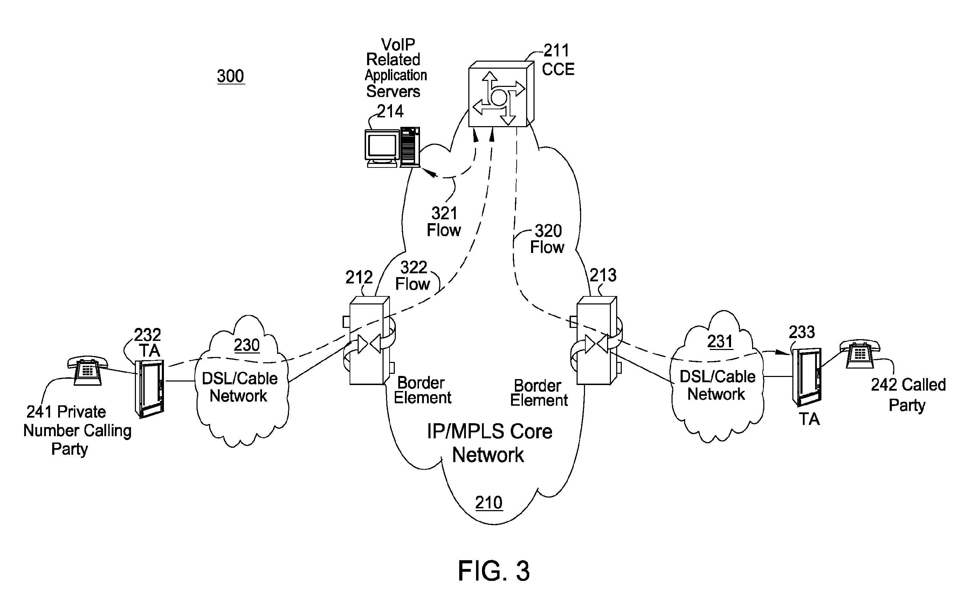

FIG. 3 illustrates an example 300 of returning phone calls while protecting calling party identification related to the present invention. In FIG. 3, called party 242 obtains from the caller ID display that caller 241 with identity in the form of the pseudo key phone number has called. Called party 242 returns the call to calling party 241 without the knowledge of the identity of calling party 241 at all by using flow 320. Upon receiving the call setup signaling message from called party 242, CCE 211 communicates with AS 214 using flow 321 to map the pseudo key phone number into the previously saved phone number of calling party 241 associated with the pseudo key phone number. AS 214 then sends the phone number of calling party 241 back to CCE 211 using flow 321. Then, CCE 211 uses the previously saved phone number of calling party 241 to complete the call setup to calling party 241 using flow 322. The actual phone number of calling party 241 is never revealed to called party 242 throughput the entire process.

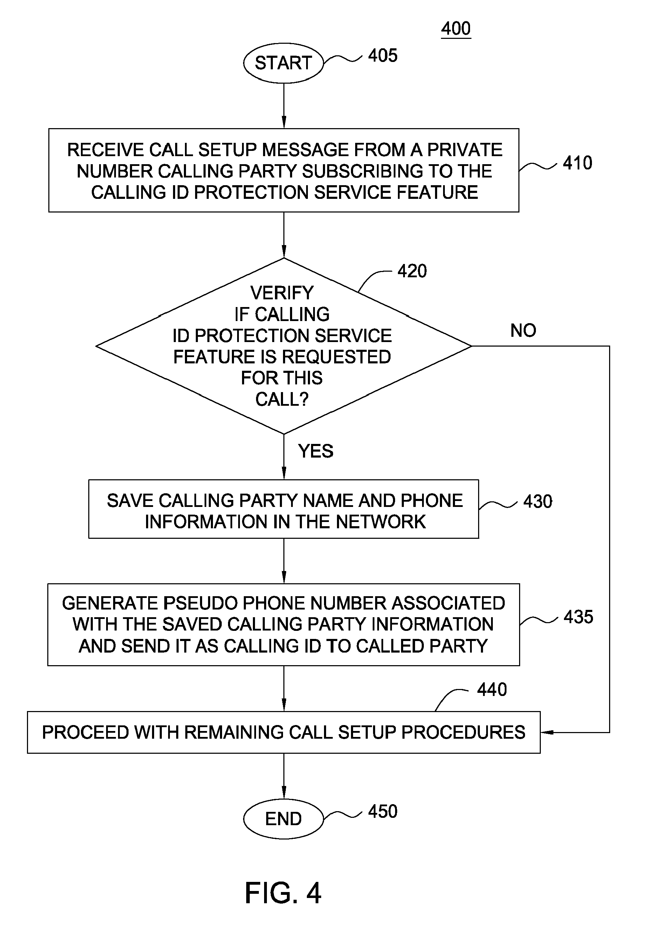

FIG. 4 illustrates a flowchart of a method 400 for sending a call return key by a calling party whose calling identification is protected by the present invention. Method 400 starts in step 405 and proceeds to step 410.

In step 410, the method receives a call setup signaling message from a calling party using the returning phone calls while protecting calling party identification service feature. In step 420, the method checks if the returning phone calls while protecting calling party identification service feature is activated by the calling party. If the service feature is activated, the method proceeds to step 430; otherwise, the method proceeds to step 440. In step 430, the method saves the calling party identification information, such as the calling name and the calling phone number, to be used later. In step 435, the method generates a pseudo key phone number associated with the saved calling party identification information and sends the pseudo key as the calling party phone number in the call setup signaling message to the called party. It should be noted that the key being a pseudo phone number is only an example. The key can be any alphanumeric code as implemented or desired by the network service provider. Furthermore, the key is intended to be temporary and as such it can be recycled for another call after a predefined period of time, e.g., a week, a month, three months and so on. In step 440, the method performs the remaining call setup procedures to complete the call setup process to the called party. The method ends in step 450.

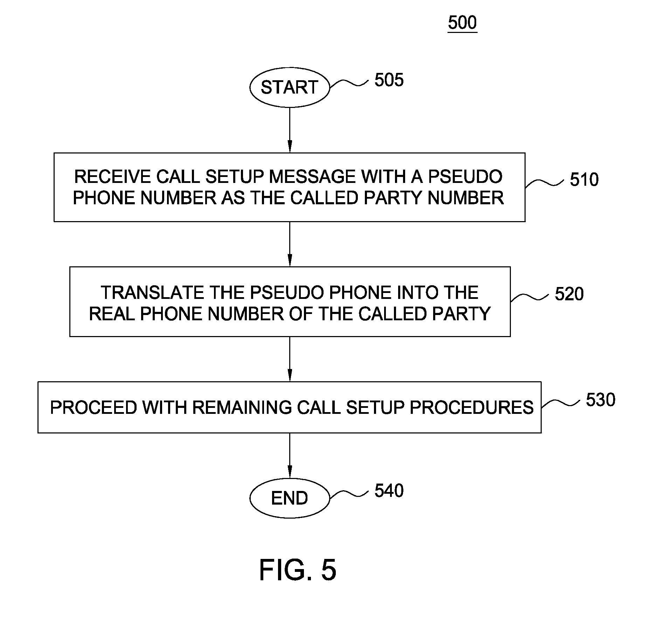

FIG. 5 illustrates a flowchart of a method 500 for returning phone calls while protecting the calling party identification of the present invention. Method 500 starts in step 505 and proceeds to step 510.

In step 510, the method receives a call setup message from a calling party using a key, e.g., a pseudo key phone number, to a called party subscribing to the returning phone calls while protecting calling party identification service feature. In step 520, the method translates the pseudo key phone number into the actual called party phone number using the previously saved calling identification information of the called party who has subscribed to the returning phone calls while protecting calling party identification service feature. In step 530, the method performs the remaining call setup procedures to complete the call setup process to the called party using the actual called party phone number. The method ends in step 540.

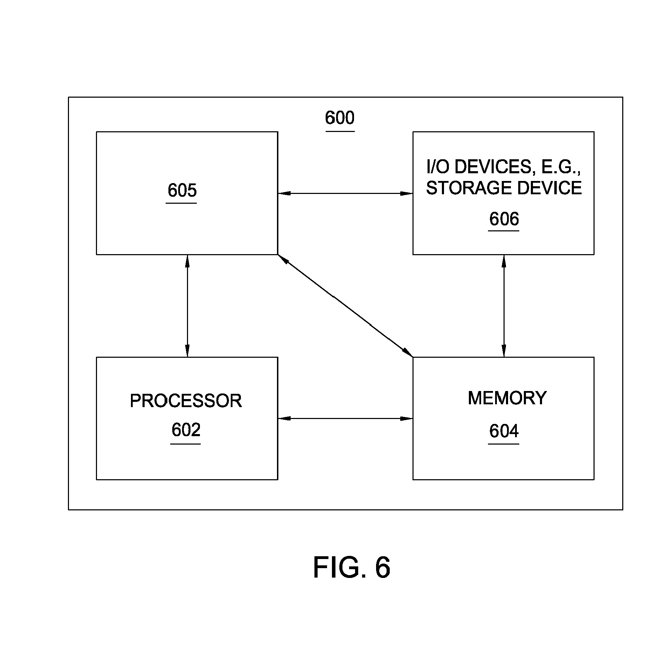

FIG. 6 depicts a high level block diagram of a general purpose computer suitable for use in performing the functions described herein. As depicted in FIG. 6, the system 600 comprises a processor element 602 (e.g., a CPU), a memory 604, e.g., random access memory (RAM) and/or read only memory (ROM), a returning phone calls while protecting calling party identification module 605, and various input/output devices 606 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present returning phone calls while protecting calling party identification module or process 605 can be loaded into memory 604 and executed by processor 602 to implement the functions as discussed above. As such, the present returning phone calls while protecting calling party identification process 605 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for protecting a calling party's identification in a communication network, comprising:
receiving a first call setup request from a calling party to a called party;
determining whether said first call setup request is associated with a service for protecting a calling party's identification; and
completing said first call setup request by using a key while protecting the calling party's identification if it is determined that said first call setup request is associated with said service for protecting a calling party's identification.

2. The method of claim 1, wherein said communication network is a Voice over Internet Protocol (VoIP) network or a Service over Internet Protocol (SoIP) network.

3. The method of claim 1, wherein said completing comprises:
saving said calling party's name or calling party's phone number in said communication network;
generating said key, where said key is a pseudo phone number associated with said calling party's name or calling party's phone number; and
sending said pseudo phone number as a calling party's identification in the first call setup request.

4. The method of claim 1, wherein said service for protecting a calling party's identification is activated by entering a predefined Dual Tone Multiple Frequency (DTMF) signal by said calling party.

5. The method of claim 3, wherein said saved calling party's name or said saved calling party's phone number is stored by an Application Server (AS).

6. The method of claim 3, wherein said pseudo phone number is generated by an Application Server (AS).

7. The method of claim 3, wherein said pseudo phone number is sent by an Application Server (AS) to a Call Control Element (CCE) and inserted by said CCE in a calling party identification field in said first call setup request destined to said called party.

8. The method of claim 1, further comprising:
receiving a second call setup request from said called party to said calling party, where said second call setup request is associated with said key;
translating said key into said calling party's phone number; and
completing said second call setup request by using said calling party's phone number.

9. The method of claim 8, wherein said translating is performed by an Application Server (AS) that has previously stored said calling party's phone number associated with said key.

10. A computer-readable medium having stored thereon a plurality of instructions, the plurality of instructions including instructions which, when executed by a processor, cause the processor to perform the steps of a method for protecting a calling party's identification in a communication network, comprising:
receiving a first call setup request from a calling party to a called party;
determining whether said first call setup request is associated with a service for protecting a calling party's identification; and
completing said first call setup request by using a key while protecting the calling party's identification if it is determined that said first call setup request is associated with said service for protecting a calling party's identification.

11. The computer-readable medium of claim 10, wherein said communication network is a Voice over Internet Protocol (VoIP) network or a Service over Internet Protocol (SoIP) network.

12. The computer-readable medium of claim 10, wherein said completing comprises:
saving said calling party's name or calling party's phone number in said communication network;
generating said key, where said key is a pseudo phone number associated with said calling party's name or calling party's phone number; and
sending said pseudo phone number as a calling party's identification in the first call setup request.

13. The computer-readable medium of claim 10, wherein said service for protecting a calling party's identification is activated by entering a predefined Dual Tone Multiple Frequency (DTMF) signal by said calling party.

14. The computer-readable medium of claim 12, wherein said saved calling party's name or said saved calling party's phone number is stored by an Application Server (AS).

15. The computer-readable medium of claim 12, wherein said pseudo phone number is generated by an Application Server (AS).

16. The computer-readable medium of claim 12, wherein said pseudo phone number is sent by an Application Server (AS) to a Call Control Element (CCE) and inserted by said CCE in a calling party identification field in said first call setup request destined to said called party.

17. The computer-readable medium of claim 10, further comprising:
receiving a second call setup request from said called party to said calling party, where said second call setup request is associated with said key;
translating said key into said calling party's phone number; and
completing said second call setup request by using said calling party's phone number.

18. The computer-readable medium of claim 17, wherein said translating is performed by an Application Server (AS) that has previously stored said calling party's phone number associated with said key.

19. An apparatus for protecting a calling party's identification in a communication network, comprising:
means for receiving a first call setup request from a calling party to a called party;
means for determining whether said first call setup request is associated with a service for protecting a calling party's identification; and
means for completing said first call setup request by using a key while protecting the calling party's identification if it is determined that said first call setup request is associated with said service for protecting a calling party's identification.

20. The apparatus of claim 19, wherein said completing means comprises:
means for saving said calling party's name or calling party's phone number in said communication network;
means for generating said key, where said key is a pseudo phone number associated with said calling party's name or calling party's phone number; and
means for sending said pseudo phone number as a calling party's identification in the first call setup request.
